(19) **Europäisches Patentamt**

**European Patent Office**

**Office européen des brevets**

(11) Veröffentlichungsnummer : **0 258 754 B1**

# (12) EUROPÄISCHE PATENTSCHRIFT

(45) Veröffentlichungstag der Patentschrift :
06.02.91 Patentblatt 91/06

(21) Anmeldenummer : 87112126.5

(22) Anmeldetag : 21.08.87

(30) Priorität : 03.09.86 DE 3629910

(43) Veröffentlichungstag der Anmeldung :
09.03.88 Patentblatt 88/10

(45) Bekanntmachung des Hinweises auf die
Patenterteilung :
06.02.91 Patentblatt 91/06

(84) Benannte Vertragsstaaten :
FR GB IT NL

(56) Entgegenhaltungen :
DE-A- 1 476 790
GB-A- 625 693
US-A- 3 900 939
MATERIALS ENGINEERING, Oktober 1969,
Seiten 28-31; H.J. WAGNER et al.: "What you
can do with that 'memory' alloy"

(51) Int. Cl.⁵ : **F01D 5/18, F01D 5/14**

(73) Patentinhaber : **MTU MOTOREN- UND
TURBINEN-UNION MÜNCHEN GMBH
Dachauer Strasse 665 Postfach 50 06 40
D-8000 München 50 (DE)**

(72) Erfinder : **Maisch, Helmut
Kochelseestrasse 7
D-8038 Gröbenzell (DE)**
Erfinder : **Fedrau, Dieter
Birkenstrasse 39
D-8011 Zorneding (DE)**

(54) **Turbinenschaufel mit Kühleinsatz.**

**Beschreibung**

Turbinenschaufel mit Kühleinsatz

Die Erfindung bezieht sich auf eine Turbinenschaufel mit einem Kühleinsatz, gemäß dem Oberbegriff des Patentanspruchs 1.

Beispielsweise im Gasturbinentriebwerksbau ist es allgemein bekannt, vergleichsweise hohen Heißgastemperaturen ausgesetzte Turbinenleit- oder Laufschaufeln mittels aus dem Triebwerksverdichter an geeigneter Stelle entnommener Kühlluft zu kühlen und für das betreffende Schaufelkühlkonzept einen im Schaufelinnern installierten Kühleinsatz vorzusehen (s.h. DE-14 76 790). Auch der Einbau von mehreren Kühleinsätzen in entsprechend geometrisch zugeordnete Schaufelinnenräume ist bekannt (s.h. DE-OS 23 20 581).

In derartigen oder ähnlichen bekannten Fällen wird zumindest ein Teil des betreffenden Schaufelkühlsystems von materialseitig an der Schaufelhohlrauminnenwand und/oder der Kühleinsatzaußenwand vorstehenden Stegen, Noppen, Falten oder dergleichen bereitgestellt ; damit kann u. a. eine den unterschiedlichen Heißgastemperatureinflüssen bedarfsgerechte Steuerung der vom Einsatz in die Kanalkonfiguration abfließenden Kühlluft erreicht werden ; es können also u. a. bedarfsgemäße örtlich gleichförmige oder ungleichförmige Kühlluftverweilzeiten oder -geschwindigkeiten bereitgestellt werden.

In den genannten oder ähnlichen bekannten Fällen ist es für eine optimale, möglichst auch verbrauchsarme Kühlfunktion eine Grundvoraussetzung, daß der oder die betreffenden Kühleinsätze im Betrieb "satt", d. h. spielfrei an der oder den geometrisch angepaßten inneren Gegenflächen des Schaufelkörpers aufliegen. Diese Grundvoraussetzung läßt sich jedoch aus montage- sowie fertigungstechnischen Gründen bisher nicht erfüllen ; trotz angestrebter genauester Fertigungsmethoden ergeben sich beim Kühleinsatz wie auch beim beispielsweise gegossenen Schaufelkern erhebliche Fertigungstoleranzen, denen entweder gar nicht oder nur mit verhältnismäßig hohem Nachbearbeitungsaufwand begegnet werden kann.

Zwecks Montage des Einsatzes ergeben sich ferner auch als Folge oftmals erforderlicher profilgeometrischer Verwindungen entsprechende Einbauschwierigkeiten. Mit anderen Worten erzwingt also die Montage des Einsatzes ein verhältnismäßig großes Bauteilspiel, wenn auf den hochkomplizierten Nachbearbeitungsaufwand verzichtet werden soll, was sich aber wiederum nachteilig auf die betriebliche Kühlfunktion auswirkt, weil keine "satte" bzw. spielfreie Bauteilauflage zwischen Schaufelkern und Einsatz gegeben ist.

Eine zusätzliche Problematik entsteht dadurch, daß der Einsatz in geeigneter Form, also praktisch unlösbar fest, mit dem Schaufelkörper verbunden werden muß ; dies geschieht in jüngster Zeit beispielsweise durch fertigungsintegrierte Lötprozesse unter Vakuum, bei denen einzelne mit den Einsätzen versehene Schaufelgruppen der örtlich erforderlichen Lötung unterzogen werden.

Als Folge des eingangs im Rahmen herkömmlicher Schaufelkonzepte und Fertigungstechnologien erwähnten Bauteilspielerfordernisses zwischen dem Schaufelkörper auf der einen und dem Einsatz auf der anderen Seite ist es praktisch bisher nicht möglich, den Einsatz in einer den betrieblichen Anforderungen gemäßen genauen Position mit dem Schaufelkörper zu verlöten oder gegebenenfalls zu verschweißen.

Zur vorstehend behandelten Problematik kommt hinzu, daß trotz praktisch unlösbarer Befestigung des Einsatzes am Schaufelkörper betriebsbedingt auftretende Dehnungsdifferenzen beherrschbar sein müssen, um unerwünschte Bauteilverformungen, insbesondere des Einsatzes, wie aber auch bauliche Beeinträchtigungen des jeweiligen Kühlsystems in Grenzen halten zu können. Thermisch bedingte Dehnungsdifferenzen haben dabei u.a. ihre Ursache in der unterschiedlichen Temperaturbeaufschlagung des Schaufelkörpers und des Einsatzes.

Bei einer aus der GB-A-625 693 bekannten und im Betrieb zu kühlenden Turbinenlaufschaufel soll in einem vorgefertigen Schaufelhohlkörper ein geometrisch angepaßter Kern angeordnet sein, und zwar letzterer als Hohlprofil oder als Vollprofil. Der Kern soll dabei ferner unter Belassung eines möglichst allseitig gleichförmigen Abstandsspaltes im Schaufelkörper angeordnet sein ; in den Abstandsspalt soll dann ein- oder mehrteiliger wellblechartiger oder aus separaten rippenartigen

Bauteilen bestehener Einsatz eingefügt werden ; dies so, daß gegenseitige Bauteilflächenkontaktierung des Einsatzes mit dem Kern und der Innenwand des Schaufelhohlkörpers vorliegen soll. Dieser Hinweis zeigt, wie extrem gering doch ganz offensichtlich in diesem bekannten Fall das Montagespiel einghalten werden muß, wenn Einsatzeinfügung (Montageanforderung) mit gegenseitiger Bauteilflächenanlage (Betriebsanforderungen der Schaufel) miteinander verknüpft sein sollen.

Ferner soll im bekannten Fall eine jeweils gegenseitige Oberflächenplatierung mit einem aus einer Kupfer-Aluminium-Nickellegierung bestehenden Material am Kern, dem gewellten Einsatz und am Schaufelhohlkörper vorgesehen werden können. Im Hinblick auf eine betrieblich graduelle thermische Dehnung einer derart gewählten Legierung kann diese dem bekannten Fall nachgesagte Verbindungsmaßnahme nur als Schutzmaßnahme im Sinne einer gegenseitigen oberflächenmäßig thermischen Kompatibilität verstanden werden. Ein im Betrieb "spielfreier" Bauteilflächensitz im Interesse einer letztlich hohen Kühleffektivitätwird gerade im bekannten Fall der GB-A mit den eingangs ausführlich dargelegten Montage- und Fertigungsnachteilen erkauft.

Im übrigen vermittelt der vorliegende bekannte Fall keinerlei Hinweis darauf, am Schaufelmantel und/oder Kühleinsatz von vorn herein vorgesehene Noppen bzw. Stege vorzusehen, um im Wege des gegenseitigen Ineinanderfügens die betriebsnotwendige Kühlkonfiguration bereitstellen zu können - ohne dabei - wie im bekannten Fall - auf eine mit der Radscheibe "verwurzelte" oder in diese integrierte Kernstruktur der Schaufel angewiesen zu sein.

Der Erfindung liegt die Aufgabe zugrunde, bei einer im Oberbegriff des Patentanspruchs 1 angegebenen Turbinenschaufel mit mindestens einem Kühleinsatz, trotz gegenseitier Fertigungstoleranzen, eine betriebsoptimale spielfreie, montage- sowie fertigungsgünstige Bauteilpaarung und -befestigung zu erzielen.

Die gestellte Aufgabe wird mit den Merkmalen des Kennzeichnungsteils des Patentanspruchs 1 erfindungsgemäß gelöst.

Unter Zugrundelegung der nachfolgend im einzelnen noch ausführlicher erläuterten spezifischen Eigenschaften von Memory-Werkstoffen kann also der betreffende Einsatz so klein gefertigt werden, daß er auch bei ungünstigen Toleranzpaarungen problemlos in die betreffende gemetrisch zugeordnete innere Aussparung des Hohlbauteils bzw. des Schaufelkerns eingesetzt werden kann. Beim metallurgischen Befestigungsprozeß, z.B. durch Verlötung im Vakuum, dehnt sich der Einsatz bei Überschreitung eines vorgegebenen Temperaturschwellwertes vergleichsweise rasch - also bei einer weiter unterhalb der max. Löttemperatur von etwa 1350° liegenden Schwelltemperatur - soweit aus, daß er sich spielfrei an die vorgegebene Ist-Kernform bzw. Innengeometrie des Hohlbauteils anlegt.

Hierdurch können z.B. sowohl für eine Turbinenschaufel bzw. den Schaufelhohlprofilkörper als auch für den Kühleinsatz vergleichsweise hohe Fertigungstoleranzen zugelassen werden zugunsten einer verbilligten Fertigung. Trotzdem wird z.B. bei einer Turbinenschaufel die angestrebte Spielfreiheit, eine optimale Steuerung der Kühlluft und eine hohe Kühlwirkung erzielt.

Der Begriff "Memory-Legierungen" bzw. des "Memory-Effekts" rührt aus der ursprünglich gemächten Erkenntnis her, daß eine bestimmte Legierung bei Über- oder Unterschreitung charakteristischer Temperaturwerte zwischen zwei Gefügephasen im Festzustand wechseln kann. Besonders ausgeprägt und exakt tritt dieser "Memory-Effekt" im Rahmen der in das Schutzbegehren der vorliegenden Erfindung miteingeschlossenen Nickel-Titanlegierung auf.

Der Begriff des "Memory-Effekts" beruht also auf dem experimentell gewonnenen Eindruck, daß das betreffende Legierungsbauteil sich an seine frühere Form "erinnert", wodurch Begriffe wie "Formgedächtnis-Effekt" (englisch : shape memory effect) geprägt wurden.

Im Rahmen der Erfindung kann also einmal davon ausgegangen werden, daß der betreffende "Memory-Einsatz" eine ihm bei niedriger Temperatur mechanisch aufgeprägte Form bis zu einem sogenannten "Schwellenwert" beibehält. Erst, wenn diese Beaufschlagungstemperatur diesen "Schwellenwert" überschreitet, "erinnert" sich der Memory-Einsatz an seinen ursprünglichen Formzustand, geht also in seine ursprüngliche Form zurück. Im Wege dieser Rückverformung ist der "Memory-Einsatz" im Stande, sich spielfrei an die Ist-Kernform des Hohlbauteils bzw. an die Innenkontur des Schaufelhohlprofils anzulegen. Dieser zuvor besprochene "Memory-Effekt" wird in der Fachsprache auch als sogenannter "Einwegeffekt" bezeichnet. Die mit Temperaturschwellenwertunterschreitung einhergehende Rückdehnung des "Memory-Einsatzes" hätte insofern keinen Nachteil bezüglich der Kühleffektivität, weil der Temperaturschwellenwert in einem derart niedrigen Temperaturbereich (z. B. 100° - 150°C) anzusiedeln wäre, in dem ohnehin eine Schaufelkühlung nicht erforderlich ist.

Die Erfindung kann durchaus auch im Rahmen eines sogenannten "Zweiweg Memory-Effekts" realisiert werden ; hierbei wird das Bauteil im martensitischen Zustand a einer verhältnismäßig starken Biegeverformung b (mit irreversiblem Anteil) unterworfen sowie anschließend erwärmt, so daß mit der Austenitphase sich eine gewollte Hochtemperaturform c einstellt. Wird das Bauteil danach abgekühlt, so bildet sich eine Niedertemperaturform d aus. Bei Durchführung der Temperaturzyklen "erinnert" sich also das Bauteil sowohl an die Hochtemperaturform c als auch an die Niedertemperaturform d. Die Hochtemperaturform c wäre also die im vorliegenden Fall optimale Form, in der sich der Einsatz absolut spielfrei an die betreffende Innenbauteilgeometrie anlegt. Wesentlicher Vorteil dieses "Zweiwegeffekts" ist es, daß sich bei Bauteilabkühlung (Form d) eine nur vergleichsweise geringe Formabweichung (bzw. Dehnungsänderung) zwischen Form c und d ergibt, in der auch noch weitestgehend Spielfreiheit des Einsatzes (Klemmsitz) möglich ist, d. h. über einen vergleichsweise großen Triebwerksarbeits- und Heißgastemperaturbereich ist "Spielfreiheit" und damit eine optimale Turbinenschaufelkühlung gewährleistet.

Vorteilhafte Ausgestaltungen der Erfindung ergeben sich aus den Merkmalen der Patentansprüche 2 bis 12.

Anhand der Zeichnungen ist die Erfindung beispielsweise weiter erläutert, es zeigen :

Fig. 1 einen Turbinenleitschaufelprofilquerschnitt nebst Kühleinsatz und Kühlkanalkonfiguration,
Fig. 2 einen Schaufellängsschnitt nach der Linie B-B der Fig. 1,

Fig. 3 einen Schaufelschnitt gemäß A-A der Fig. 1,

Fig. 4 einen gemäß Schnitt B-B der Fig. 1 gesehenen Teilausschnitt einer Turbinenleitschaufel in erster Abwandlung des Kühl- und Einsatzbefestigungskonzepts,

Fig. 5 einen Schaufelteilausschnitt gemäß Fig. 4, jedoch unter Verdeutlichung eines weiter abgewandelten Einsatzausbildungs- und Befestigungskonzepts,

Fig. 6 einen Schaufelteilausschnitt gemäß Fig. 5, jedoch unter Verdeutlichung eines weiter abgewandelten Einsatzausbildungs-, -befestigungs- und Kühlkonzepts,

Fig. 7 einen im Sinne der Fig. 1 geschnittenen Schaufelhohlprofilkörper mit einem gegenüber Fig. 1 abgewandelten Kühlkonzept in Kombination mit zwei Kühleinsätzen,

Fig. 8 eine vordere Schaufelquerschnittssektion unter Verdeutlichung eines bei Temperaturschwellenwertüberschreitung einer sich auffaltenden Formänderung unterworfenen, an einer Stelle geteilten Kühleinsatzes und

Fig. 9 einen gegenüber Fig. 4 abgewandelten Teilausschnitt einer Turbinenleitschaufel, worin die Formänderung des Einsatzes gleichzeitig mit einer Einsatzbefestigung am Schaufelkörper verknüpft ist.

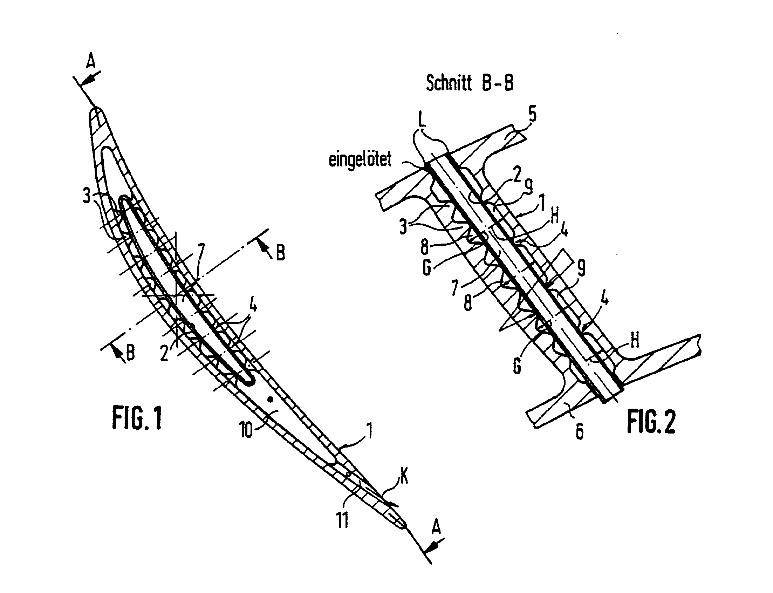

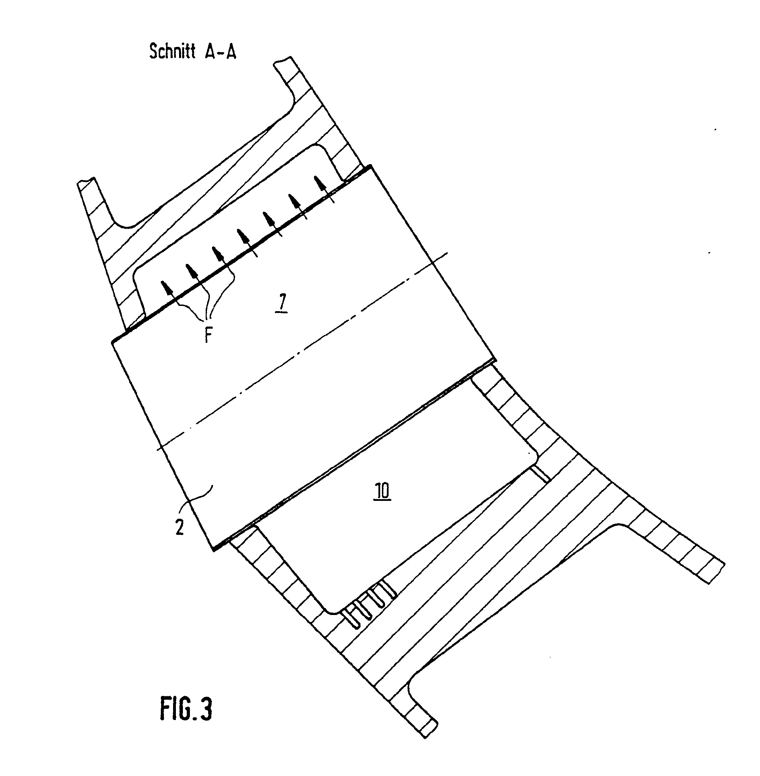

Gemäß Fig. 1 bis 3 wird das betreffende metallische Hohlbauteil durch einen Schaufelhohlprofilkörper 1 einer Turbinenleitschaufel verdeutlicht, die einen Kühleinsatz 2 aufweist.

Im vorliegenden Fall ist der Kühleinsatz 2 glattwandig ausgebildet. Die erforderliche Kühlgeometrie wird von gegen den Einsatz 2 vorspringenden Noppen 3, 4 des Schaufelhohlprofilkörpers 1 dargestellt ; die Noppen 3, 4 sind integrale Bestandteile des Hohlprofilkörpers 1. Betriebliche Voraussetzung ist es, daß sich der Kühleinsatz 2 im wesentlichen über seine gesamte Baulänge spielfrei am Hohlkörper 1, d. h. insbesondere an den seitlich auskragenden Noppenenden, abstützt. Im vorliegenden Beispiel ist der Schaufelhohlprofilkörper 1 mittels fuß- und kopfseitig seitlich auskragender Deckbandsegmentplatten 5, 6 erweitert, beidendseitig ist also der Einsatz 2 durch entsprechende Aussparungen der Segmentplatten 5, 6 geführt.

Erfindungsgemäß soll nun der Kühleinsatz 2 aus einem Memory-Werkstoff gefertigt sein, so daß er sich bei Überschreitung eines vorgegebenen Temperaturschwellenwertes an eine vorgegebene Schaufelinnengeometrie anlegen kann. Die genannte Temperaturschwellenüberschreitung kann z. B. aus der beim metallurgisch festen Verbinden des Kühleinsatzes 2 am Hohlprofilkörper 1 auftretenden Bauteiltemperaturbeaufschlagung resultieren.

Die metallurgisch feste Verbindung kann durch Lötung, Schweißung, Diffusionsschweißung oder hierfür besonders geeignete Diffusionsverbindungsverfahren vorgenommen werden. All den genannten Fällen liegt also ein bei vergleichsweise hohen Temperaturen einsetzender Verbindungsprozeß zugrunde. Der Verbindungsprozeß kann in hierfür geeigneten Öfen oder, z. B. im Falle des Lötprozesses, in einer Kapsel, unter Vakuum, durchgeführt werden ; bei einer NiTi-Legierung als Werkstoff für den Kühleinsatz 2 kann also die Löttemperatur mit max. etwa 1350°C veranschlagt werden, bei einem gewichtsprozentseitig je zur Hälfte aus Ni und Ti bestehenden Memory-Werkstoff kann also die Dehnung bzw. Umfangszunahme des Einsatzes 2 bei Überschreitung der Schwellentemperatur mit ca. 6 bis 7% veranschlagt werden ; hieraus folgt andererseits, daß sich der Kühleinsatz 2 bei Fertigung der Schaufel mit genügend kleinen Abmessungen bequem in die betreffende Schaufelinnengeometrie einsetzen läßt, bevor z. B. das Hoch-temperatur-Lötungs-Verfahren in die Wege geleitet wird.

Gemäß Fig. 2 ist der Einsatz 2 entlang der Stellen L, d. h., genauer an bzw. in der betreffenden oberen Aussparung der kopfseitigen Deckplatte 5 mit dem Schaufelprofilhohlkörper 1 verlötet, die Verlötung erfolgt also hier im kopfseitigen Bauteilendbereich, sie könnte auch im fußseitigen und/oder kopfseitigen Endbereich vorgenommen werden.

Wie in Fig. 1 bis 3 angegeben oder ähnlich gestaltet, sollte die unlösbare metallurgisch feste Verbindung radial außerhalb der unmittelbar vom Heißgas umspülten Schaufelgeometrie angeordnet sein, um z. B. eine Lötverbindung hinsichtlich ihrer Festigkeit nicht zu beeinträchtigen ; dies hat den weiteren Vorteil, daß trotz spielfreien Aufliegens des Einsatzes 2 auf den betreffenden Enden der Noppen 3, 4 u. a. thermisch bedingte Differenzdehnungen kompensiert werden können.

Beim Ausführungsbeispiel nach Fig. 1 bis 3 kann der Kühleinsatz 2 wahlweise von der oberen oder unteren Seite aus mittels der aus dem Triebwerksverdichter entnommenen Kühlluft beaufschlagt werden ; dabei gelangt die Kühlluft zunächst in den Innen- oder Stauraum 7 des Einsatzes. Von dort kann die Kühlluft mittels im Einsatz 2 enthaltener Öffnungen in Richtung auf den Nasenkantenbereich (Pfeile F) sowie seitlich, örtlich gezielt den zwischen den Noppen 3, 4 ausgebildeten Kanalsektionen 8, 9 zugeführt werden (Pfeile G, H). Nach Durchströmung der Kanalsektionen 8, 9 gelangt die Kühlluft in einen stromabwärtigen Schaufelhohlraum 10, aus dem die Kühlluft, gemäß Pfeilrichtung K, über schaufelhinterkanten- sowie schaufeldruckseitig angeordnete und ausmündende Bohrungen 11 dem Heißgasstrom zugeführt wird.

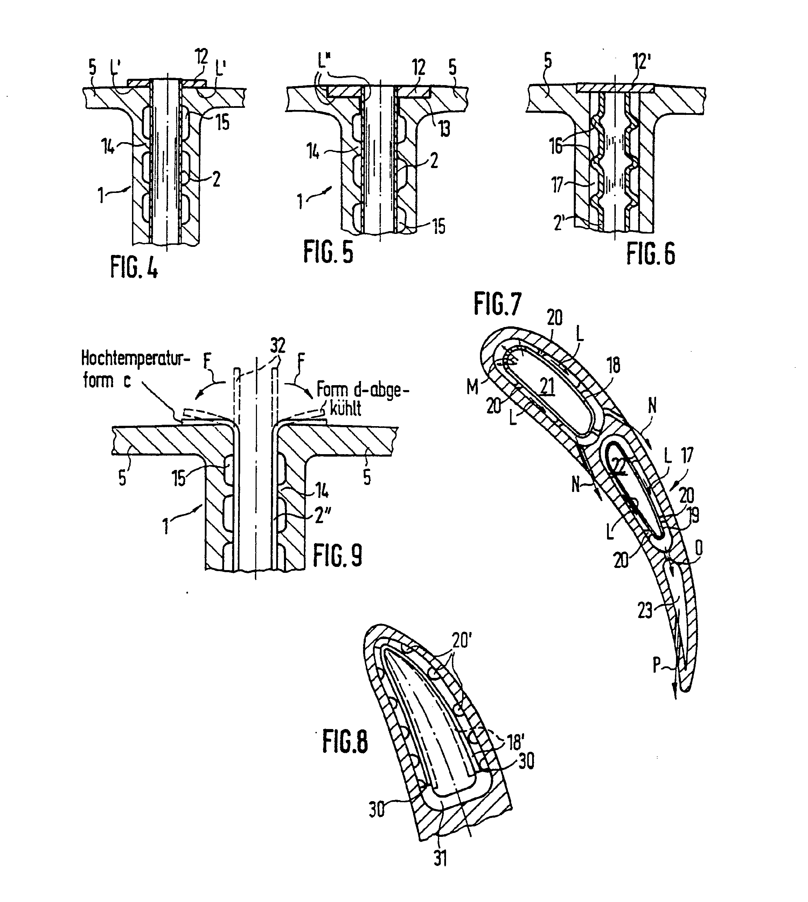

Die Fig. 4 und 5 veranschaulichen Turbinenleitschaufelabwandlungen, bei denen der jeweilige Kühleinsatz 2 hier beispielsweise mit einer kopfseitigen, als Bauteilendanschlag ausgebildeten Erweiterung 12 ausgestattet ist. Entlang der Stellen L' (Fig. 4) bzw.

L" (Fig. 5) kann der Einsatz 2 mit dem Schaufelprofilhohlkörper 1 bzw. mit dessen hier z. B. äußerer Deckplattenkonfiguration 5 metallurgisch, z. B. durch Lötung, fest verbunden sein.

Fig. 5 weicht von Fig. 4 weiter dadurch ab, daß die Erweiterung 12 in einer die örtliche Positionierung des Einsatzes 2 unterstützenden, zugeordneten Ausnehmung 13 sitzt, die ihrerseits in der oberen Deckplatte 5 ausgebildet ist.

Im Gegensatz zu Fig. 1 bis 3 bilden in Fig. 4 und 5 die betreffenden hier stegartigen Materialvorsprünge 14 des Schaufelhohlkörpers 1 sich im Sinne des Profilschnitts nach Fig. 1 in Schaufelprofilrichtung erstreckende Einzelkühlkanäle 15 aus.

Abweichend von Fig. 1 bis 3 sowie Fig. 4 und 5 bildet in Fig. 6 der Kühleinsatz 2' selbst im Wege geei-gneter wellenförmiger Profilierungen 16 Kühlkanäle 17 im Sinne derjenigen (15) nach Fig. 4 und 5 aus. Im Sinne dieser Profilierungen 16 nach Fig. 6 könnten aber durchaus auch Kühlkanalsektionen erstellt werden wie sie aus Fig. 1 und 2 hervorgehen. Von Fig. 5 weicht Fig. 6 weiter dadurch ab, daß dort die betreffende, als Endanschlag ausgebildete Erweiterung 12' des Einsatzes 2' zugleich eine örtliche Abdeckplatte des Einsatzes 2' sowie des Kühlkanalsystems ausbil-det.

In Fig. 4 bis 6 könnten die Erweiterungen 12, 12' auch integrale Wandbestandteile der Einsätze 2, 2' sein.

Fig. 7 verkörpert einen möglichen Anwendungsfall für die Erfindung, bei dem der Schaufelhohlprofilkörper 17 zwei räumlich voneinander getrennte, aus einem Memory-Werkstoff gefertigte Kühleinsätze 18, 19 aufweist. Die Kühleinsätze 18, 19 liegen auch hier, als Folge der z. B. mit dem metallurgischen Verbin-dungsprozeß einhergehenden Temperaturschwel-lenwertüberschreitungen, spielfrei an vorspringenden Noppen 20 an, die ihrerseits die an die Einsätze 18, 19 angepaßte Schaufelinnengeometrie bereitstellen.

Fig. 7 verkörpert ferner ein Anwendungsbeispiel in Kombination mit einer Konvektionskühlung (Pfeile L), einer Nasenkantenaufprallkühlung (Pfeile M) und einer Filmkühlung (Pfeile N) entlang druck- bzw. saugseitiger Schaufeloberflächen.

Dabei bilden die Einsätze 18, 19 z. B. schaufelfußseitig mit Kühlluft beaufschlagte Stauräume 21, 22 aus. Mittels nasenkantenseitiger Bohrungen im Einsatz 18 wird zunächst die Aufprallkühlung (Pfeile M) vollzogen, wonach - unter Schaufelwandkonvektionskühlung (Pfeile L) - die Kühlluft über im Schaufelmantel enthaltene Kanäle, gemäß Pfeilrichtungen N, tangential an den schaufeldruck- bzw. -saugseitigen Schaufelwänden in die Heißgasströmung abfließt. Aus dem Stauraum 22 des Einsatzes 19 fließt die Kühlluft über örtlich entsprechend positionierte Bohrungen in die Zwischenräume - zwischen Einsatz 19 und Schaufelmantel - ab (Pfeile L), von dort gelangt die Kühlluft über Bohrungen (Pfeilfolge O) in einen separaten, schaufelhinterkantenseitigen Hohlraum 23, aus letzterem fließt dann die Kühlluft über schau-feldruckseitig, tangential entlang der Schaufelaustritt-skante ausmündende Bohrungen (Pfeil P) in die Heißgasströmung ab.

Gemäß der Erfindung kann der jeweilige Memory-Werkstoff - neben der zu Fig. 1 bis 3 schon erwähnten NiTi-Legierung - auch u. a. eine Kupfer-Zink-Aluminium (Cu Zn Al)-Legierung oder eine Kupfer-Aluminium-Nickel (Cn Al Ni)-Legierung sein.

Die Erfindung kann selbstverständlich auch dann vorteilhaft praktiziert werden, wenn anstelle der zuvor aus sämtlichen Beispielen ersichtlichen, in sich geschlossenen Einsatz- bzw. Kühleinsatzbauweise eine an einer Stelle örtlich geteilte Blecheinsatzbauweise vorgesehen sein sollte, die mit den vorteilhaften Kriterien des "Memory-Effekts" sich im Einklang befindet. Hierzu könnte - je nach örtlichen Einbauge-gebenheiten - der mit Temperaturschwellenwertüber-schreitung einhergehende Umfangsdehnungseffekt mit einem Formänderungseffekt im Sinne einer Einsatzauffaltung kombiniert werden, um die "satte" spielfreie Anlage und Abstützung des Einsatzes bzw. Kühleinsatzes (Turbinenschaufel) an der betreffenden Hohlbauteil- (bzw. Schaufel-) Innengeometrie zu gewährleisten. Dies geht aus Fig. 8 hervor, worin der zunächst mit verhältnismäßig großem Spiel in die betreffende Schaufelaussparung eingefügte Einsatz 18' (gestrichelte Kontur) nach Überschreitung der Schwellentemperatur sich spielfrei gegen die aus Noppen 20' ausgebildete Schaufelinnenkontur auffal-tet. Dabei findet auch eine Einsatzverriegelung statt, indem die betreffenden freien Enden des Einsatzes 18' in Eckräume 30 einrasten, die zwischen radial übereinander gestaffelten Schaufelwandstegen 31 und daran angrenzenden Noppenenden ausgebildet sind.

Beim Ausführungsbeispiel nach Fig. 9 kann der Einsatz 2" beispielsweise im Sinne des eingangs erwähnten "Zwei-Weg-Memory-Effekts" örtlich fest mit dem Schaufelprofilkörper 1 verbunden sein ; d. h. im Wege der dargestellten Auffaltung (Pfeile F) bzw. Umbiegung der zunächst geraden, radial aus dem Schaufelkörper 1 auskragenden Enden 32 gegen die betreffenden Oberflächen des äußeren Deckbandsegments 5 wird eine Hochtemperaturform (c) des Einsatzes repräsentiert. Diese Hochtemperaturform c ändert sich auch bei Abkühlung nur unwesentlich (Form d, abgekühlt), so daß keine Lösungsgefahr des Kühleinsatzes 2" besteht. In der genannten Hochtemperaturform c bilden also die Enden 32 des Kühlein-satzes 2" eine Erweiterung im Sinne von Position 12 (Fig. 4) aus. Die Einsatzbefestigung nach Fig. 9 erfordert also grundsätzlich keinen metallurgischen Verbindungsprozeß, z. B. durch Löten oder Schweißen, sondern einen geeigneten, in die Fertigung integrierten Temperaturbeaufschlagungsprozeß für den

"Form-Gedächtnis-Effekt".

Eine Kühleinsatzbefestigung nach Fig. 9 kann durchaus, im Sinne der Erfindung, mit einem metallurgischen Verbindungsprozeß (s. h. Lötstellen L', L" - Fig. 4 und 5) kombiniert werden, bei welchem Prozeß zugleich die erforderlichen Umschlagstemperaturen bzw. Temperaturschwellenwertüberschreitungen für den "Memory-Effekt" bereitgestellt werden können.

## Ansprüche

1. Gekühlte Turbinenschaufel für Gasturbinentriebwerke, die einen metallischen Schaufelhohlprofilkörper (1) und mindestens einen während Betriebstemperatur daran festgelegten, auf die Schaufel- innengeometrie abgestimmten Kühleinsatz (2) aufweist, der zwischen am Hohlkörper und/oder Einsatz angeorndeten, steg- oder noppenartig ausgebildeten Materialvorsprüngen (3, 4) Zwischenräume oder Kanäle (8, 9) zur Kühlmittelführung ausbildet, dadurch gekennzeichnet, daß der Kühleinsatz (2) aus einem nach dem Form-Gedächtnis-Effekt ("shape memory effect") arbeitenden Werkstoff gefertigt ist, derart, daß er sich als Folge einer Formänderung, die mit Überschreitung eines vorgegebenen Temperaturschwellenwertes einhergeht, spielfrei am Hohlprofilkörper (1) abstützt.

2. Turbinenschaufel nach Anspruch 1, dadurch gekennzeichnet, daß eine gegenseitige metallurgisch feste Verbindung des Schaufelhohlprofilkörpers und des Kühleinsatzes zumindest in einem Bauteilendbereich erfolgt.

3. Turbinenschaufel nach Anspruch 1 und 2, dadurch gekennzeichnet, daß der Kühleinsatz (2) mit einer vorgefertigten fuß- oder kopfseitigen, als Bauteilendanschlag ausgebildeten Erweiterung (12) ausgestattet ist, mit der er fest mit dem Hohlprofilkörper (1) verbunden ist.

4. Turbinenschaufel nach Anspruch 3, dadurch gekennzeichnet, daß der Hohlprofilkörper (19) eine an die Erweiterung (12) angepaßte Ausnehmung (13) aufweist.

5. Turbinenschaufel nach einem oder mehreren der Ansprüche 2 bis 4, dadurch gekennzeichnet, daß die metallurgisch feste Verbindung radial außerhalb der unmittelbar vom Heißgas umspülten Schaufelgeometrie vorgesehen ist.

6. Turbinenschaufel nach Anspruch 5, dadurch gekennzeichnet, daß die Verbindung an kopf- und/oder fußseitigen Deckbandsegmentplatten der Turbinenschaufeln vorgesehen ist.

7. Turbinenschaufel nach einem oder mehreren der Ansprüche 2 bis 6, dadurch gekennzeichnet, daß die metallurgisch feste Verbindung durch Lötung oder Schweißung erfolgt.

8. Turbinenschaufel nach einem oder mehreren der Ansprüche 1 bis 7, dadurch gekennzeichnet, daß als Memory-Werkstoff eine NiTi- oder eine CuZnAl- oder eine CuAlNi-Legierung vorgesehen ist.

9. Turbinenschaufel nach Anspruch 8, dadurch gekennzeichnet, daß der eine Memory-Werkstoff, in Gewichtspozenten ausgedrückt, zu 50% aus Nickel und zu 50% aus Titan besteht.

10. Turbinenschaufel nach einem oder mehreren der Ansprüche 1 bis 9, dadurch gekennzeichnet, daß der Kühleinsatz (2 ; 18') in sich geschlossen oder zumindest teilweise in Richtung der Schaufelhöhe geteilt ausgebildet und angeordnet ist und zwar so, daß er bei vorgegebener Temperaturschwellenwertüberschreitung gänzlich oder teilweise einer sich auffaltenden Formänderung unterworfen ist.

11. Turbinenschaufel nach Anspruch 10, dadurch gekennzeichnet, daß der Kühleinsatz (2") im Wege der durch Formänderung hervorgerufenen Auffaltung (F') örtlich fest mit dem Schaufelhohlprofilkörper (1) verbunden ist.

12. Turbinenschaufel nach Anspruch 11, dadurch gekennzeichnet, daß die schaufelfuß- und/oder kopfseitige Erweiterung durch die mit der Formänderung des Kühleinsatzes (2") hervorgerufene Auffaltung (F') entsteht.

## Claims

1. Cooled turbine blade for gas turbine engines having a metallic blade hollow profile body (1) and at least one cooling insert (2) fixed thereon during operating temperature and matched to blade inner geometry, which between material projections (3, 4), arranged on the hollow body and/or insert and formed in a bar-like or knub-like manner, forms intermediate spaces or channels (8, 9) for conducting coolant, characterized in that the cooling insert (2) is manufactured from a construction material working according to the shape memory effect, in such a way that it is supported without play on the hollow profile body (1) as a result of a shape change which goes along with the exceeding of a specified temperature threshold value.

2. Turbine blade according to claim 1, characterized in that a mutual metallurgically fixed connection of the blade hollow profile body and of the cooling insert takes place at least in one structural part end region.

3. Turbine blade according to claim 1 and 2, characterized in that the cooling insert (2) is equipped with a prefabricated broadening (12) at the foot or head and constructed as structural part end stop, with which broadening it is firmly connected to the hollow profile body (1).

4. Turbine blade according to claim 3, characterized in that the hollow profile body (19) has a recess (13) adapted to the broadening (12).

5. Turbine blade according to one or several of claims 2 to 4, characterized in that the metallurgically fixed connection is provided radially outside the blade geometry around which the hot gas flows directly.

6. Turbine blade according to claim 5, characterized in that the connection is provided at shroud band segment plates of the turbine blades at the head and/or foot.

7. Turbine blade according to one or several of claims 2 to 6, characterized in that the metallurgically fixed connection takes place through soldering or welding.

8. Turbine blade according to one or several of claims 1 to 7, characterized in that as memory material a NiTi-alloy or a CuZnA1-alloy or a CuAlNi-alloy is provided.

9. Turbine blade according to claim 8, characterized in that the one memory material, expressed in percentages by weight, consists of 50% nickel and 50% titanium.

10. Turbine blade according to one or several of claims 1 to 9, characterized in that the cooling insert (2 ; 18′) is constructed and arranged in a closed manner or divided at least partially in the direction of the blade height, in such a way that with specified exceeding of the temperature threshold value it is subjected entirely or partially to an unfolding shape change.

11. Turbine blade according to claim 10, characterized in that the cooling insert (2″) by way of the unfolding (F′) generated by shape change is connected locally firmly to the blade hollow profile body (1).

12. Turbine blade according to claim 11, characterized in that the broadening on the blade foot and/or head side occurs through the unfolding (F′) generated with the shape change of the cooling insert (2″).

**Revendications**

1. Aube de turbine refroidie, pour groupes de propulsion à turbine à gaz, présentant un corps profilé creux d'aube (1) métallique et au moins un noyau de refroidissement (2) fixé sur celle-ci lorsqu'on se trouve à la température de fonctionnement et adoptant la géométrie intérieure de l'aube, noyau réalisant, entre des saillies de matière (3, 4) réalisées sous forme de nervures ou de boutons, disposées sur le corps creux et/ou le noyau, des espaces intermédiaires ou des canaux (8, 9) pour le guidage du fluide de refroidissement, caractérisé en ce que le noyau de refroidissement (2) est fabriqué en un matériau travaillant suivant l'effet de mémoire de forme ("shape memory effect"), de telle façon que par suite d'une modification de forme intervenant avec un dépassement d'une valeur de seuil de température prédéterminée, il prenne appui sans aucun jeu sur le corps profilé creux (1).

2. Aube de turbine selon la revendication 1, caractérisée en ce qu'une liaison rigide métallurgique réciproque du corps profilé creux d'aube et du noyau de refroidissement s'effectue au moins dans une zone d'extrémité de l'élément de construction.

3. Aube de turbine selon la revendication 1 et 2, caractérisée en ce que le noyau de refroidissement (2) est doté d'un élargissement préfabriqué (12), situé du côté du pied et de la tête, ayant la forme d'une butée pour les éléments de construction, à l'aide duquel le noyau est relié rigidement au corps profilé creux (1).

4. Aube de turbine selon la revendication 3, caractérisée en ce que le corps profilé creux (19) présente un évidement (13) adapté à l'élargissement (12).

5. Aube de turbine selon une ou plusieurs des revendications 2 à 4, caractérisée en ce que la liaison rigide de nature métallurgique est prévue radialement à l'extérieur de la géométrie de l'aube qui est directement léchée par les gaz chauds.

6. Aube de turbine selon la revendication 5, caractérisée en ce que la liaison est prévue sur des plaques serpentées de bande de recouvrement situées du côté du pied et/ou de la tête des aubes de turbine.

7. Aube de turbine selon une ou plusieurs des revendications 2 à 6, caractérisée en ce que la liaison rigide de nature métallurgique s'effectue par brasage ou soudage.

8. Aube de turbine selon un ou plusieurs des revendications 1 à 7, caractérisée en ce que le matériau à effet de mémoire qui est prévu est un alliage de NiTi, ou un alliage de CuZnAl ou un alliage de CuAlNi.

9. Aube de turbine selon la revendication 8, caractérisée en ce que le matériau à effet de mémoire contient, exprimé en pourcentage en poids, jusqu'à 50% de nickel et 50% de titane.

10. Aube de turbine selon une ou plusieurs des revendication 1 à 9, caractérisée en ce que le noyau de refroidissement (2, 18′) est fermé en soi ou au moins divisé et disposé partiellement en direction de la hauteur de l'aube, à savoir de façon que dans le cas d'un dépassement prédéterminé d'une valeur de seuil de température, il soit soumis entièrement ou partiellement à une modification de forme produisant un déploiement.

11. Aube de turbine selon la revendication 10, caractérisée en ce qu'au cours du déploiement (F′) provoqué par la modification de forme, le noyau de refroidissement (2″) est relié localement de façon rigide au corps profilé creux d'aube (1).

12. Aube de turbine selon la revendication 11, caractérisée en ce que l'élargissement situé du côté du pied ou de la tête de l'aube est produit par le déploiement (F′) provoqué à l'aide de la modification de forme du noyau de refroidissement (2″).

FIG.1

Schnitt B-B

eingelötet

FIG.2

Schnitt A-A

7

10

F

2

FIG.3

FIG. 4

FIG. 5

FIG. 6

FIG.7

Hochtemperaturform c

Form d-abgekühlt

FIG. 9

FIG.8